# EUROPÄISCHE PATENTSCHRIFT

(11) **EP 3 471 902 B1**
(45) Veröffentlichungstag und Bekanntmachung des Hinweises auf die Patenterteilung: **27.11.2019**
(21) Anmeldenummer: 17723684.1
(22) Anmeldetag: 15.05.2017
(51) Int. Cl.: B21B 45/08

(54) **ANORDNUNG ZUR BEARBEITUNG EINER BRAMME ODER EINES BANDES**
ARRANGEMENT FOR TREATING A SLAB OR A STRIP
SYSTÈME DE TRAITEMENT D'UNE BRAME OU D'UNE BANDE

(30) Priorität: 17.06.2016 DE 102016210830; 15.07.2016 DE 102016212967
(43) Veröffentlichungstag der Anmeldung: 24.04.2019
(73) Patentinhaber: SMS Group GmbH, 40237 Düsseldorf (DE)
(72) Erfinder: SEIDEL, Jürgen, 57223 Kreuztal (DE)
(74) Vertreter: Kross, Ulrich
(86) Internationale Anmeldenummer: PCT/EP2017/061558
(87) Internationale Veröffentlichungsnummer: WO 2017/215859

(56) Entgegenhaltungen:
- WO-A1-97/11797
- WO-A1-2011/134193
- CN-U- 201 906 744
- CN-U- 204 953 553
- DE-A1-102008 020 412

## Beschreibung

Die Erfindung betrifft eine Anordnung zur Bearbeitung einer Bramme oder eines Bandes, die entlang einer Förderrichtung gefördert wird, wobei an einer ersten Stelle der Anordnung eine erste Arbeitsstation zur Vornahme einer ersten Arbeitsoperation angeordnet ist und wobei an einer zweiten Stelle der Anordnung eine zweite Arbeitsstation zur Vornahme einer zweiten Arbeitsoperation angeordnet ist, wobei die zweite Arbeitsstation die Beaufschlagung der Bramme oder des Bandes mit Flüssigkeit erlaubt, wobei die erste Stelle und die zweite Stelle in Förderrichtung zueinander versetzt sind und wobei zwischen der ersten Stelle und der zweiten Stelle der Anordnung mindestens eine Dichtungsvorrichtung angeordnet ist, um Flüssigkeit in oder gegen die Förderrichtung zurückzuhalten, die in der zweiten Arbeitsstation eingesetzt wird.

Die Anforderungen an die Dichtigkeit eines Zunderwäschers nehmen ständig zu. Insbesondere bei Endlos-Gießwalzanlagen sind Temperaturverluste infolge vagabundierenden Wassers oder größere mit Wasser beaufschlagte Bereiche an der Brammenoberfläche zu vermeiden. Weiterhin sollen die Anlagen möglichst kompakt gebaut werden und Nachbaraggregate wie beispielsweise Induktionsheizungen nicht mit Wasser beaufschlagt werden.

Eine Anordnung der eingangs genannten Art in Form eines Abschnitts beispielsweise einer Gießwalzanlage für metallische Brammen bzw. Bänder mit einem Zunderwäscher offenbaren die DE 689 19 618 T2, die DE 199 38 705 A1 und die DE 198 17 002 A1. Um die Wassermenge auf der Oberseite der Brammen bzw. des Bandes zu minimieren, sind hier verstellbare Wasserauffangrinnen vorgesehen, in die ein Teil der Wassermenge rasch abgeleitet werden kann. Die Positionen der Wasserauffangrinnen sind einstellbar und können an die zu entzundernde Vorband- oder Brammendicke angepasst und damit der Spalt zwischen der Bramme und der Wasserauffangrinne minimiert werden. Um den mit Wasser beaufschlagten Bereich zusätzlich einzudämmen, sind ein- und auslaufseitig Abquetsch- bzw. Treiberrollen vorgesehen.

Weitere ähnliche Lösungen, die sich mit dem Zurückhalten von Wasser beschäftigen, zeigen die CN 2644038 Y, die US 2014/0047886 A1, die KR 2004021788 A1, die KR 200905524 U1, die KR 899704 B1, die CN 204486488 U, die CN 202539222 U, die CN 201669283 U, die CN 105170668 A, die CN 102430599 A und die CN 2723067 Y.

Der gewünschte Abdichtungseffekt gemäß den vorbekannten Lösungen ist jedoch nicht immer optimal bzw. ausreichend. Es kann insbesondere aus folgenden Gründen zu Undichtigkeiten kommen:
Beim Einsatz von verschlissenen Treibrollen im Bereich der mittleren Bandbreite ist bei einem breiten Band ein Spalt zwischen Bramme bzw. Band und Rolle zu beobachten.

Bei Vorbändern mit lokaler Welligkeit oder mit lokalen Beulen entsteht ein Spalt zwischen dem Vorband und der Treibrolle bzw. der Wasserauffangrinne.

Bei Brammen mit einer Querwölbung ist ebenfalls ein Spalt zwischen der Bramme bzw. dem Band und der Treibrolle bzw. Wasserauffangrinne vorhanden.

Bei Einsatz eines Stauchers oder einer Stauchpresse entstehen Aufwulstungen vor dem Zunderwäscher und so entsteht gleichermaßen häufig ein Spalt.

Bei dünnen Vorbändern oder Brammen können durch höhere Kräfte an den Abquetschrollen und zusätzlich größeren Rollendurchmessern die Spalte reduziert werden. Bei zunehmender Brammen- bzw. Banddicke ist jedoch ein Verbiegen der Brammen kaum noch möglich.

Weiterhin wird bei höheren Abquetschkräften der Zunder in die Oberfläche der Brammen bzw. des Bandes gedrückt; dadurch erhöht sich die Gefahr, dass es bedingt durch den Zunder Probleme hinsichtlich der Qualität des Bandes gibt.

Generell möglich ist es alternativ auch, durch entsprechend starke Gegenspritzanlagen vor dem Zunderwäscher die Wasserflut einzudämmen. Dies führt allerdings nachteilig zu einer unerwünschten stärkeren Abkühlung der Brammen, was insbesondere beim Endlos-Gießwalzen von Nachteil bzw. energetisch nicht optimal ist.

Somit sind besondere Maßnahmen notwendig, um die Dichtigkeit insbesondere eines Zunderwäschers mit feststehenden und/oder rotierenden Düsen sicherzustellen und Temperaturverluste auch bei einem Spalt zwischen Abquetschrolle und Bramme bzw. Vorband minimieren zu können.

Der Erfindung liegt daher die Aufgabe zugrunde, eine Anordnung der gattungsgemäßen Art so fortzubilden, dass bei schonender Behandlung der Bramme bzw. des Bandes eine verbesserte, effektive Abdichtung des Bereichs erreicht werden kann, in dem mit Flüssigkeit gearbeitet wird. Insbesondere soll also das Wasser aus einem Zunderwäscher bzw. aus einer Kühlvorrichtung verbessert zurückgehalten werden können.

Die Lösung dieser Aufgabe durch die Erfindung ist dadurch gekennzeichnet, dass die Dichtungsanordnung eine Anzahl Dichtungselemente aufweist, wobei mindestens zwei der Dichtungselemente in Richtung quer zur Förderrichtung überlappend angeordnet sind und wobei die Dichtungselemente so aufgehängt sind, dass ein sich im unten liegenden Bereich des Dichtungselements angeordneter Dichtungsabschnitt sich über seine gesamte Erstreckung in Richtung quer zur Förderrichtung auf die Oberfläche der Bramme oder des Bandes anlegen kann.

Die Dichtungselemente können dabei als Platten ausgebildet sein. Die Dichtungselemente können auch eine Rolle umfassen, die auf der Oberfläche der Bramme oder des Bandes abrollen kann.

Nach einer Ausführungsform der Erfindung ist vorgesehen, dass jedes Dichtungselement mit zwei voneinander in Richtung quer zur Förderrichtung beabstandet angeordneten Verbindungselementen mit einem Trägerelement verbunden ist; die Verbindungselemente sind bevorzugt Ketten.

Jedes Dichtungselement kann alternativ hierzu mit mindestens einem Lager an einem Trägerelement gelagert sein, wobei das Lager ein Lagerspiel aufweist, das so gewählt ist, dass es an der Lagerstelle eine Bewegung des Dichtungselements in vertikale Richtung von mindestens 5 mm erlaubt. Hiernach ist also ein bewusst mit großem Lagerspiel versehenes Lager zur Lagerung des Dichtungselements vorgesehen, so dass dieses eine pendelnde Bewegungsmöglichkeit hat und sich so der Oberfläche der Bramme bzw. des Bandes anpassen kann.

Der Betrag der Überlappung zweier Dichtungselemente beträgt bevorzugt mindestens 1 mm, insbesondere mindestens 1 cm.

Bevorzugt sind zwischen 2 und 16 Dichtungselemente in Richtung quer zur Förderrichtung nebeneinander angeordnet.

Die Dichtungselemente können in mehreren Reihen, insbesondere in zwei oder drei Reihen, angeordnet sein, wobei die Reihen in Förderrichtung aufeinanderfolgen und wobei die Reihen in Förderrichtung höchstens 1 m beabstandet sind, vorzugsweise höchstens 0,5 m.

Die erste Arbeitsstation ist vorzugsweise eine Induktionsheizung, eine induktive Kantenheizung, ein Ofen, insbesondere ein Rollenherdofen oder ein gasbeheizter Ofen, eine Rollgangskapselung, eine Dämmhaube oder ein Messgerät.

Die zweite Arbeitsstation ist bevorzugt ein Zunderwäscher oder eine Brammen- oder Vorbandkühleinrichtung.

Der Versatz der ersten und der zweiten Stelle in Förderrichtung beträgt vorzugsweise weniger als 10 m, insbesondere weniger als 5 m.

Im Bereich der Dichtungsanordnung kann mindestens eine Wasserauffangvorrichtung angeordnet sein.

Im Bereich der Dichtungsanordnung kann ferner weiterhin eine Luftabblasung oder eine Wasserquerabspritzung angeordnet sein.

Demgemäß erfolgt nach der vorliegenden Idee die Abdichtung eines Zunderwäschers oder einer Kühlvorrichtung insbesondere mittels einer Anzahl in Breitenrichtung überlappend angeordneter Platten, die so in Längs- und Querrichtung gelagert sind, dass sie sich auf eine beliebig geformte und insbesondere gekrümmte Oberfläche einer Bramme bzw. eines Bandes auflegen können und dadurch einen minimalen Spalt zwischen Platte und Bramme bzw. Band herstellen.

Es kann somit eine Anpassung der Dichtungselemente bzw. deren Dichtungsabschnitte an die sich gegebenenfalls ändernde Brammen- bzw. Bandform über der Breite erreicht werden.

Die einzelnen Platten der Dichtungsvorrichtung werden insbesondere an mehr als einer Position, bevorzugt an ihren beiden seitlichen Endbereichen, aufgehängt bzw. fixiert oder sie werden hier in jeweiligen spielbehafteten Lagern geführt. Somit ist die Lage des Dichtungsabschnitts der Dichtungselemente der Dichtungsvorrichtung nicht mehr fest, sondern sie kann sich der jeweiligen Oberfläche der Bramme bzw. des Bandes anpassen.

Die vorgesehenen Platten (Dichtungselement) sind dabei bevorzugt kürzer (gemessen in Richtung quer zur Förderrichtung) als ein Viertel der Breite der zu bearbeitenden Bramme bzw. des Bandes.

Wesentlich ist dabei eine Überlappung der einzelnen benachbarten Dichtungselemente (Platten) in Querrichtung. Der Überlappungsbereich ist dabei bevorzugt größer als 1mm.

Der Dichtungsabschnitt des Dichtungselements (Platte), der mit der heißen Bramme bzw. dem Band in Kontakt kommt, besteht bevorzugt aus temperaturbeständigem Material.

Dabei hat bevorzugt das Dichtungselement (Platte) ein solches Gewicht, dass es sich auf die Oberfläche der Bramme bzw. des Bandes auflegen kann und nicht vom Wasserschwall des Zunderwäschers bzw. der Kühlvorrichtung weggedrückt wird.

Die Dichtungsvorrichtung ist zwischen einer sensiblen Einrichtung und einem Entzunderungs- oder Kühlbalken angeordnet. Der Abstand zwischen der sensiblen Einrichtung und dem Balken ist dabei bevorzugt kleiner als 10 m, insbesondere kleiner als 5 m.

Die Dichtungsvorrichtung kann innerhalb eines Zunderwäschergehäuses oder vor dem Zunderwäschergehäuse oder auch an beiden genannten Positionen angeordnet sein.

Vorteilhaft ist auch der kombinierte Einsatz der vorgeschlagenen Dichtungsvorrichtung mit einer weiteren Wasserabweise-Einrichtung, wie eine Luftabblasung oder einer Wasserquerabspritzung.

Die vorgeschlagene Dichtungsvorrichtung wird vorzugsweise gleichzeitig als Teil einer Wasserauffangvorrichtung gestaltet, die Wasser vom Zunderwäscher bzw. von der Kühleinrichtung aufnimmt und abführt.

Die Erfindung kommt mit besonderem Vorteil dann zum Einsatz, wenn relativ dicht neben einem Zunderwäscher oder einer anderen Brammen- bzw. Vorbandkühleinrichtung eine Induktionsheizung und/oder eine induktive Kantenheizung bzw. ein Rollenherdofen oder ein anderer gasbeheizter Ofen bzw. eine Rollgangskapselung oder Dämmhaube bzw. Messgeräte bzw. ähnliche wasser- und dampfsensible Einrichtungen angeordnet sind, so dass eine wirkungsvolle Abdichtung zwingend ist. Demgemäß wird zwischen mindestens einer der genannten Einrichtungen und einer Entzunderungsvorrichtung bzw. einer Kühlvorrichtung die beschriebene Dichtungsvorrichtung nach der Erfindung eingesetzt.

Weitere vorteilhafte Ausgestaltungen der Anordnung sind Gegenstand der abhängigen Ansprüche.

In der Zeichnung sind Ausführungsbeispiele der Erfindung dargestellt. Es zeigen:
- Fig. 1: schematisch die Seitenansicht einer Anordnung zur Bearbeitung einer Bramme oder eines Bandes, wobei der Bereich eines Zunderwäscher dargestellt ist,
- Fig. 2: die Anordnung nach Figur 1, gesehen entgegen der Förderrichtung,
- Fig. 3: den Schnitt A-B gemäß Figur 2, wobei die Dichtungselemente der Dichtungsvorrichtung dargestellt sind,
- Fig. 4: eine alternative Ausgestaltung der Anordnung zur Bearbeitung einer Bramme oder eines Bandes, gesehen entgegen der Förderrichtung,
- Fig. 5: die Draufsicht auf die Anordnung gemäß Figur 4,
- Fig. 6: schematisch die Seitenansicht einer weiteren alternativen Ausgestaltung der Anordnung zur Bearbeitung einer Bramme oder eines Bandes, wobei die Dichtungsvorrichtung vor oder im Bereich eines Zunderwäschers dargestellt ist,
- Fig. 7: die Anordnung nach Figur 6, gesehen entgegen der Förderrichtung,
- Fig. 8: die Draufsicht auf die Anordnung gemäß Figur 7,
- Fig. 9: schematisch die Seitenansicht einer alternativen Ausgestaltung einer Anordnung zur Bearbeitung einer Bramme oder eines Bandes, und
- Fig. 10: die Draufsicht auf die Anordnung gemäß Figur 9.

In den nachfolgenden Figuren ist generell eine Anordnung 1 zur Bearbeitung einer Bramme bzw. eines Bandes 2 zu sehen, die eine Dichtungsvorrichtung 3 aufweist, mit der ein Zunderwäscher 11 bzw. Zunderwäscher-Spritzbalken von einem Bereich abgedichtet wird, in dem sich möglichst wenig Wasser befinden soll. Die Bramme bzw. das Band wird in eine Förderrichtung F gefördert, die horizontale Richtung quer zu dieser ist mit Q bezeichnet.

Die Anordnung kann Bestandteil einer Gieß-Walzanlage für metallische Brammen bzw. Bänder sein. Der Zunderwäscher bzw. Zunderwäscher-Spritzbalken kann in einem Zunderwäschergehäuse untergebracht sein.

Die Dichtungsvorrichtung 3 weist Dichtungselemente 4 auf, die unterschiedlich gestaltet sein können. Die Dichtungselemente 4 haben einen Dichtungsabschnitt 5, der zur Kontaktnahme mit der Bramme bzw. mit dem Band 2 ausgebildet und entsprechend temperaturstabil ist.

Die einzelnen Dichtungselemente 4 kontaktieren demgemäß die Oberfläche 6 der Bramme bzw. des Bandes 2, um den gewünschten Dichtungseffekt zu bewerkstelligen.

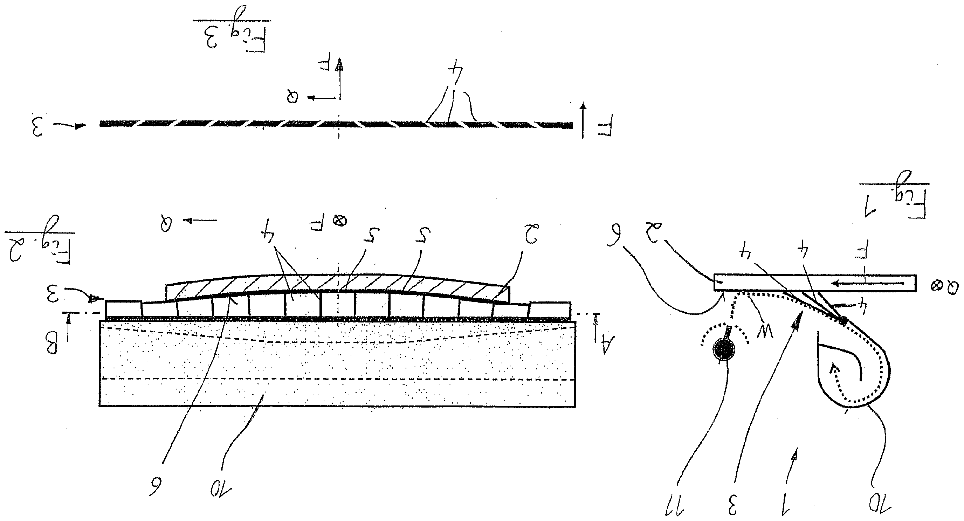

In den Figuren 1 bis 3 ist eine erste Ausführungsform der Erfindung zu sehen, aus der die mögliche Konstruktion und das Wirkprinzip hervorgehen. Die dort gezeigte Dichtungsvorrichtung 3 besteht hier aus Dichtungselement 4 in Form von Platten, die über die Breite eines Vorbandes oder einer Bramme 2 angeordnet sind. Die Dichtungselemente 4 sind dabei so pendelnd oder so mit Lagerspiel angeordnet bzw. aufgehängt, dass sie sich mit ihrem sich unten befindlichen Dichtungsabschnitt 5 auf die Oberfläche 6 der Bramme bzw. des Bandes 2 anlegen können und so einen Zunderwäscher 11 von einem Bereich, der vor Flüssigkeit geschützt werden soll, effektiv und optimal abdichten.

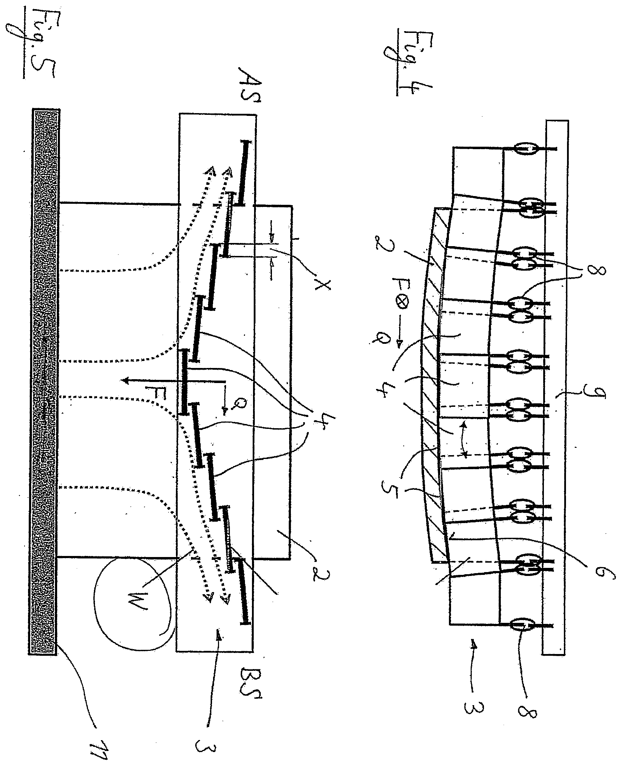

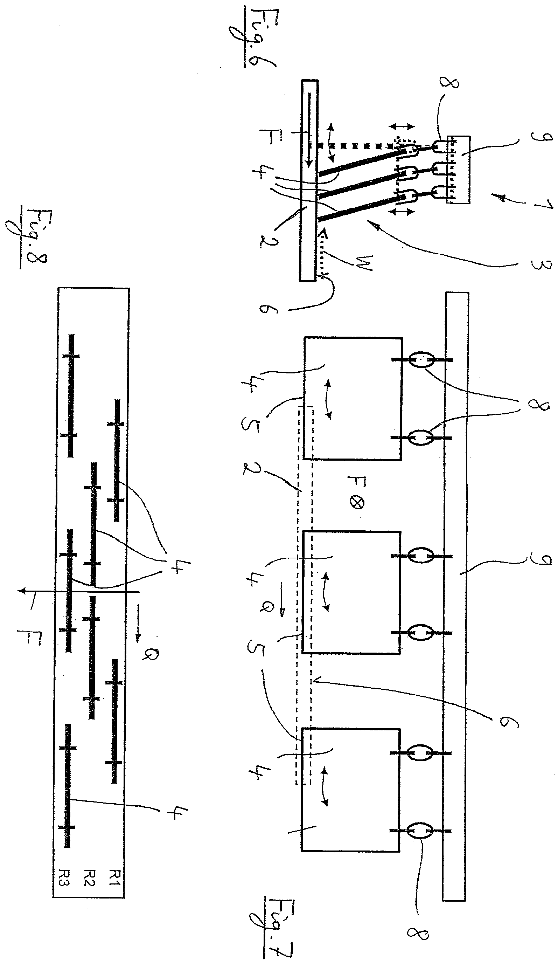

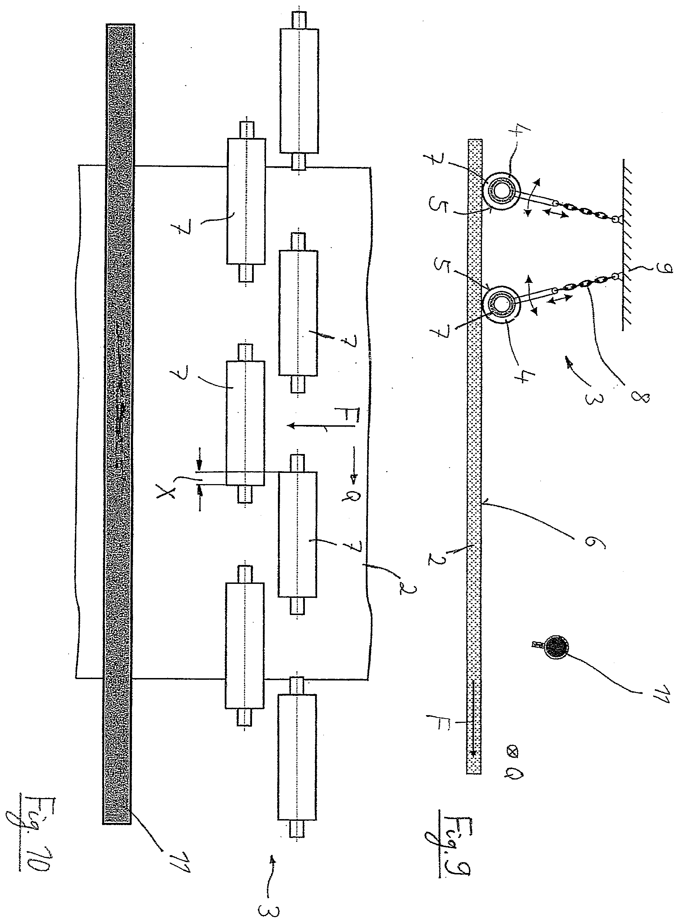

Die Dichtungselemente 4 können einreihig (wie in Figur 1 bis 3 dargestellt) oder auch mehrreihig (wie in der alternativen Ausführungsform nach den Figuren 6 bis 8 dargestellt, s. hier die Reihen R1, R2 und R3) angeordnet werden. Wesentlich ist in allen Fällen, dass es in Richtung Q quer zur Förderrichtung F der Bramme bzw. des Bandes 2 zu einer Überlappung der einzelnen Dichtungselemente 4 kommt (in den Figuren 5 und 10 ist die Überlappung mit x angegeben).

Wie in Figur 1 gesehen werden kann, ist eine Wasse- bzw. Zunderauffangvorrichtung 11 vorgesehen. Hier sind jedoch im Einlaufbereich des Wassers die Dichtungselemente 4 beweglich gelagert, so dass die intensive Dichtwirkung erzielt wird. Die in den Figuren 1 bis 3 dargestellten Platten (Dichtungselemente 4) passen sich nach Durchlaufen des Kopfes der Brammenoberfläche beispielsweise mit Querwölbung an. Die einzelnen pendelnd gelagerten Dichtungselemente 4 sind hier in der Wasserauffangvorrichtung 10 integriert und schleifen mit ihrer entsprechenden Gewichtskraft auf der Brammenoberfläche, wodurch der optimale Dichteffekt erreicht wird. Die benachbarten Dichtungselemente 4 überlappen sich in Breitenrichtung (siehe hierzu insbesondere den Schnitt A-B gemäß Figur 3), um die Dichtigkeit und Beweglichkeit gewährleisten zu können. Die einzelnen Dichtungselement in Plattenform sind hier vorzugsweise nur in einem definierten eingeschränkten Winkelbereich beweglich angeordnet, um einerseits die Anpassung an die Brammen- oder Bandform zu gewährleisten, andererseits aber nicht komplett herunter zu hängen, wenn sich keine Bramme bzw. keine Band in der Vorrichtung befindet. Der Bewegungsbereich im Bereich des Dichtungsabschnitts 5 des Dichtungselements 4 beträgt beispielsweise in Höhenrichtung lediglich maximal 30 mm.

Demgemäß gelangt Wasser W (s. Fig. 1) vom Zunderwäscher 11 auf die Bramme 2, das von der Wasserauffangvorrichtung 10 wieder aufgenommen wird, wozu die Dichtungsvorrichtung 3 Hilfestellung leistet. In Figur 1 kann gesehen werden, wie die einzelnen pendelnd gelagerten plattenförmigen Dichtungselemente 4 in Abhängigkeit von der Oberfläche 6 der Bramme 2 mehr oder weniger herunter hängen, um sicherzustellen, dass die einzelnen Dichtungsabschnitte 5 sich mit engem Spalt an die Oberfläche 6 anlegen. Bei der in Figur 2 dargestellten Wölbung der Bramme 2 hängt eine zentral angeordnete Platte 4 (Dichtungselement) weiter herunter, als es eine solche im Randbereich tut (siehe hierzu die einzelnen Lagen der Dichtungselemente 4 in Figur 1). Figur 3 illustriert die Überlappung der einzelnen Dichtungselemente 4.

Eine alternative Ausführungsform der Erfindung ist in den Figuren 4 und 5 dargestellt. Es liegt das gleiche Wirkungsprinzip vor, wie es vorstehend beschrieben wurde. Hier sind die einzelnen kurzen Platten 4 (Dichtungselemente) über der Breite der Dichtungsvorrichtung 3 angeordnet und an Verbindungselementen 8 mit einem Trägerelement 9 verbunden. Bei den Verbindungselementen 8 handelt es sich im Ausführungsbeispiel um Ketten. Damit wird erreicht, dass sich die einzelnen Dichtungselemente 4 variabel gemäß der Oberflächenform der Bramme 2 anpassen können. Die einzelnen Dichtungselemente 4 sind hier - in der Draufsicht gesehen - pfeilförmig gestaffelt über der Breite der Vorrichtung mit unterschiedlichem Ausrichtungswinkel angeordnet, so dass sich die Positionierung ergibt, wie sie in Figur 5 gesehen werden kann, von der Antriebsseite AS bis zur Bedienungsseite BS. Durch diese Anordnung der Dichtungselemente 4 kann das Wasser leichter seitlich abfließen. Auch hier ist eine Überlappung x vorgesehen, wie es aus Figur 5 ersichtlich ist.

Statt einer pfeilförmigen Anordnung der einzelnen Dichtungselemente 4 können die Platten analog auch mehrreihig versetzt zueinander angeordnet werden. Dies ist in den Figuren 6 bis 8 illustriert. In der Seitenansicht gemäß Figur 6 kann man gut erkennen, wie beim Durchlaufen der Bramme 4 in Förderrichtung F die in Längs- und Querrichtung pendelnd gelagerten Platten 4 entsprechend angestellt werden und sich somit dicht auf die Oberfläche 6 der Bramme 2 legen. Das gegen die Förderrichtung F fließende Wasser wird wirkungsvoll durch die Reibkraft und Gewichtskraft der Platten 4 zurückgehalten.

Um bei sensiblen Materialien ein Schleifen der Dichtungselemente 4 auf der Oberfläche 6 der Bramme 2 zu vermeiden, kann alternativ auch anstatt der Dichtungselemente 4 in Form gerader Platten auch eine rotierende Rolle 7 vorgesehen werden, wie es das Ausführungsbeispiel nach den Figuren 9 und 10 zeigt. In Figur 10 sind versetzt zueinander angeordnete Rollen 7 zu erkennen, die ebenfalls pendelnd gelagert oder verbunden mit Lagerblöcken aufgehängt sind, um sich der Oberfläche 6 der Bramme 2 anpassen zu können. Im dargestellten Ausführungsbeispiel sind zwei Reihen Dichtungselemente 4, jeweils bestehend aus mehreren nebeneinander angeordneten Rollen 7, vorgesehen, wobei die beiden (oder gegebenenfalls auch mehreren) Reihen in Förderrichtung F einen Abstand von höchstens 1 m, vorzugsweise von höchstens 0,5 m, haben.

Die Rollen 7 können in Förderrichtung F oder auch gegen diese angestellt sein, wie es aus Figur 9 ersichtlich ist. In Figur 9 ergibt sich die Lage der linken Rolle 7 durch eine Auslenkung infolge Spülwasserdrucks. Die Rolle dichtet infolge ihres Eigengewichts ab. Bei der rechten Rolle 9 in Figur 9 ergibt sich die Lage infolge des Kontakts mit der Bramme bzw. dem Vorband.

Oberhalb der eigentlichen Rolle 7 kann zusätzlich ein entsprechender plattenförmiger Abschnitt zum Abhalten von Spritzwasser angeordnet sein. An diesen wiederum greifen Trägerelemente 8 - hier wiederum in Form von Ketten - an, mit denen die Dichtungselemente 4 an einem Trägerelement 9 fixiert sind.

Die dargestellten Ausführungsformen sind nur beispielhaft zu verstehen. Das Prinzip des Abdichtens mittels der Dichtungsvorrichtung 3 kann auch anders ausgestaltet sein. Bevorzugt sind mehrere Einheiten von Dichtungselementen 4, die über die Breite der Vorrichtung bzw. der Bramme 2 angeordnet sind und die mit einer geraden Kante (d.h. mit einem Dichtungsabschnitt 5) über der Breite der Vorrichtung pendelnd gelagert sind, um sich der Oberfläche der Bramme bzw. des Bandes anpassen zu können und so einen optimalen Dichtungseffekt zu erzeugen.

Die beschriebene Dichtungsvorrichtung kann Bestandteil eines Zunderwäschers sein bzw. in einen solchen integriert. Alternativ oder additiv kann eine solche Dichtungsvorrichtung auch vor einem Zunderwäscher angeordnet sein.

Zusätzlich zu der beschriebenen Dichtungsvorrichtung 3 kann eine Druckluftabblasung vor der Dichtungsvorrichtung 3 vorgesehen werden, um das Restwasser sicher zurückzuweisen. Möglich ist auch der zusätzliche Einsatz von Wasser zur Querabspritzung; diese Option sollte allerdings nur in minimalem Umfang eingesetzt werden.

### Bezugszeichenliste:

- 1: Anordnung zur Bearbeitung einer Bramme oder eines Bandes
- 2: Bramme / Band / Vorband
- 3: Dichtungsvorrichtung
- 4: Dichtungselement
- 5: Dichtungsabschnitt
- 6: Oberfläche der Bramme / des Bandes
- 7: Rolle
- 8: Verbindungselement (Kette)
- 9: Trägerelement
- 10: Wasserauffangvorrichtung
- 11: Zunderwäscher bzw. Zunderwäscher-Spritzbalken

- F: Förderrichtung
- Q: horizontale Richtung quer zur Förderrichtung
- x: Überlappung
- R1: Reihe
- R2: Reihe
- R3: Reihe
- W: Wasser

## Patentansprüche

1. Anordnung (1) zur Bearbeitung einer Bramme oder eines Bandes (2), die entlang einer Förderrichtung (F) gefördert wird, wobei an einer ersten Stelle der Anordnung (1) eine erste Arbeitsstation zur Vornahme einer ersten Arbeitsoperation angeordnet ist und wobei an einer zweiten Stelle der Anordnung (1) eine zweite Arbeitsstation zur Vornahme einer zweiten Arbeitsoperation angeordnet ist, wobei die zweite Arbeitsstation die Beaufschlagung der Bramme oder des Bandes (2) mit Flüssigkeit erlaubt, wobei die erste Stelle und die zweite Stelle in Förderrichtung (F) zueinander versetzt sind und wobei zwischen der ersten Stelle und der zweiten Stelle der Anordnung (1) mindestens eine Dichtungsvorrichtung (3) angeordnet ist, um Flüssigkeit in oder gegen die Förderrichtung (F) zurückzuhalten, die in der zweiten Arbeitsstation eingesetzt wird,
**dadurch gekennzeichnet, dass**
die Dichtungsanordnung (3) eine Anzahl Dichtungselemente (4) aufweist, wobei mindestens zwei der Dichtungselemente (4) in Richtung quer (Q) zur Förderrichtung (F) überlappend (x) angeordnet sind und wobei die Dichtungselemente (4) so aufgehängt sind, dass ein sich im unten liegenden Bereich des Dichtungselements (4) angeordneter Dichtungsabschnitt (5) sich über seine gesamte Erstreckung in Richtung quer (Q) zur Förderrichtung (F) auf die Oberfläche (6) der Bramme oder des Bandes (2) anlegen kann.

2. Anordnung nach Anspruch 1, **dadurch gekennzeichnet, dass** die Dichtungselemente (4) als Platten, insbesondere als ebene Platten, ausgebildet sind.

3. Anordnung nach Anspruch 1, **dadurch gekennzeichnet, dass** das Dichtungselement (4) eine Rolle (7) umfasst, die auf der Oberfläche (6) der Bramme oder des Bandes (2) abrollen kann.

4. Anordnung nach einem der Ansprüche 1 bis 3, **dadurch gekennzeichnet, dass** jedes Dichtungselement (4) mit zwei voneinander in Richtung quer (Q) zur Förderrichtung (F) beabstandet angeordneten Verbindungselementen (8) mit einem Trägerelement (9) oder einer Wasserauffangvorrichtung (10) verbunden ist.

5. Anordnung nach Anspruch 4, **dadurch gekennzeichnet, dass** die Verbindungselemente (8) Ketten sind.

6. Anordnung nach einem der Ansprüche 1 bis 3, **dadurch gekennzeichnet, dass** jedes Dichtungselement (4) mit mindestens einem Lager an einem Trägerelement (9) oder einer Wasserauffangvorrichtung (10) gelagert ist, wobei das Lager ein Lagerspiel aufweist, das so gewählt ist, dass es an der Lagerstelle eine Bewegung des Dichtungselements (4) in vertikale Richtung von mindestens 5 mm, vorzugsweise von mindestens 10 mm, erlaubt.

7. Anordnung nach einem der Ansprüche 1 bis 6, **dadurch gekennzeichnet, dass** die einzelnen Dichtungselemente (4) vorzugsweise an mehr als einer Position (z. B. 2) aufgehängt bzw. fixiert werden oder in einem spielbehafteten Lager an mehr als einem Punkt anliegen.

8. Anordnung nach einem der vorangegangenen Ansprüche, **dadurch gekennzeichnet, dass** der Betrag der Überlappung (x) zweier Dichtungselemente (4) mindestens 1 mm, vorzugsweise mindestens 1 cm, beträgt.

9. Anordnung nach einem der vorangegangenen Ansprüche, **dadurch gekennzeichnet, dass** zwischen 2 und 16 Dichtungselemente (4) in Richtung quer (Q) zur Förderrichtung nebeneinander angeordnet sind.

10. Anordnung nach einem der vorangegangenen Ansprüche, **dadurch gekennzeichnet, dass** die Dichtungselemente (4) in mehreren Reihen, insbesondere in zwei oder drei Reihen (R1, R2, R3) angeordnet sind, wobei die Reihen in Förderrichtung (F) aufeinanderfolgen und wobei die Reihen in Förderrichtung (F) höchstens 1 m beabstandet sind, vorzugsweise höchstens 0,5 m.

11. Anordnung nach einem der vorangegangenen Ansprüche, **dadurch gekennzeichnet, dass** die Dichtelemente (4) in Draufsicht gesehen pfeilförmig gestaffelt über die Breite der Vorrichtung angeordnet sind.

12. Anordnung nach einem der vorangegangenen Ansprüche, **dadurch gekennzeichnet, dass** die erste Arbeitsstation eine Induktionsheizung, eine induktive Kantenheizung, ein Ofen, insbesondere ein Rollenherdofen oder ein gasbeheizter Ofen, eine Rollgangskapselung, eine Dämmhaube oder ein Messgerät ist.

13. Anordnung nach einem der Ansprüche 1 bis 12, **dadurch gekennzeichnet, dass** die zweite Arbeitsstation ein Zunderwäscher oder eine Brammen- oder Vorbandkühleinrichtung ist.

14. Anordnung nach einem der Ansprüche 1 bis 13, **dadurch gekennzeichnet, dass** der Versatz der ersten und der zweiten Stelle bzw. Arbeitsstation in Förderrichtung (F) weniger als 10 m beträgt, vorzugsweise weniger als 5 m.

15. Anordnung nach einem der Ansprüche 1 bis 14, **dadurch gekennzeichnet, dass** im Bereich der Dichtungsanordnung (3) mindestens eine Wasserauffangvorrichtung (10) angeordnet ist.

16. Anordnung nach einem der Ansprüche 1 bis 15, **dadurch gekennzeichnet, dass** im Bereich der Dichtungsanordnung (3) weiterhin eine Luftabblasung oder eine Wasserquerabspritzung angeordnet ist.

17. Anordnung nach einem der vorangegangenen Ansprüche, **dadurch gekennzeichnet, dass** die Dichtungsanordnung (3) innerhalb eines Zunderwäschergehäuses oder / und vor einem Zunderwäschergehäuse angeordnet ist.

18. Anordnung nach einem der vorangegangenen Ansprüche, **dadurch gekennzeichnet, dass** die Dichtungsanordnung (3) gleichzeitig als Teil einer Wasserauffangvorrichtung dient.

## Claims

1. Arrangement (1) for processing a slab or a strip (2), conveyed along a conveying direction (F), wherein a first work station for undertaking a first work operation is arranged at a first location of the arrangement (1) and wherein a second work station for undertaking a second work operation is arranged at a second location of the arrangement (1), wherein the second work station allows action on the slab or the strip (2) by liquid, wherein the first location and the second location are offset relative to one another in conveying direction (F) and wherein at least one sealing device (3) is arranged between the first location and the second location of the arrangement (1) in order to restrain liquid, which is used in the second work station, in or against the conveying direction (F),
**characterised in that**
the sealing arrangement (3) comprises a plurality of sealing elements (4), wherein at least two of the sealing elements (4) are arranged to be overlapping (x) in a direction transverse (Q) to the conveying direction (F) and wherein the sealing elements (4) are suspended so that a sealing section (5), which is arranged in the region of the sealing element (4) lying at the bottom, can bear on the surface (6) of the slab or the strip (2) over its entire length in a direction transverse (Q) to the conveying direction (F).

2. Arrangement according to claim 1, **characterised in that** the sealing elements (4) are constructed as plates, particularly as flat plates.

3. Arrangement according to claim 1, **characterised in that** the sealing element (4) comprises a roller (7) which can roll on the surface (6) of the slab or the strip (2).

4. Arrangement according to any one of claims 1 to 3, **characterised in that** each sealing element (4) is connected with a support element (9) or a water collecting device (10) by two connecting elements (8) arranged at a mutual spacing in a direction transverse (Q) to the conveying direction (F).

5. Arrangement according to claim 4, **characterised in that** the connecting elements (8) are chains.

6. Arrangement according to any one of claims 1 to 3, **characterised in that** each sealing element (4) is mounted by at least one mount on a support element (9) or a water collecting device (10), wherein the mount has a mounting play which is so selected that it allows at the mounting location a movement of the sealing element (4) of at least 5 millimetres, preferably at least 10 millimetres, in vertical direction.

7. Arrangement according to any one of claims 1 to 6, **characterised in that** the individual sealing elements (4) are preferably suspended or fixed at more than one position (for example, two) or bear, in a mount subject to play, against more than one point.

8. Arrangement according to any one of the preceding claims, **characterised in that** the amount of overlap (x) of two sealing elements (4) is at least 1 millimetre, preferably at least 1 centimetre.

9. Arrangement according to any one of the preceding claims, **characterised in that** between two and sixteen sealing elements (4) are arranged adjacent to one another in a direction transverse (Q) to the conveying direction.

10. Arrangement according to any one of the preceding claims, **characterised in that** the sealing elements (4) are arranged in a plurality of rows, particularly in two or three rows (R1, R2, R3), wherein the rows are successive in conveying direction (F) and wherein the rows are spaced in the conveying direction (F) by at most 1 metre, preferably at most 0.5 metres.

11. Arrangement according to any one of the preceding claims, **characterised in that** the sealing elements (4) as seen in plan view are arranged to be stacked in arrow shape over the width of the device.

12. Arrangement according to any one of the preceding claims, **characterised in that** the first work station is an induction heating means, an induction edge heating means, a furnace, particularly a roller hearth furnace or a gas-heated furnace, a roller path encapsulation, an insulating hood or a measuring instrument.

13. Arrangement according to any one of claims 1 to 12, **characterised in that** the second work station is a scale washer or a slab or pre-strip cooling device.

14. Arrangement according to any one of claims 1 to 13, **characterised in that** the offset of the first and second locations or work station in conveying direction (F) is less than 10 metres, preferably less than 5 metres.

15. Arrangement according to any one of claims 1 to 14, **characterised in that** at least one water collecting device (10) is arranged in the region of the sealing arrangement (3).

16. Arrangement according to any one of claims 1 to 15, **characterised in that** in addition an air blowing-away device or a water transverse spraying-away device is arranged in the region of the sealing arrangement (3).

17. Arrangement according to any one of the preceding claims, **characterised in that** the sealing arrangement (3) is arranged within a scale washer housing and/or in front of a scale washer housing.

18. Arrangement according to any one of the preceding claims, **characterised in that** the sealing arrangement (3) at the same time serves as part of a water collecting device.

## Revendications

1. Agencement (1) destiné au traitement d'une brame ou d'une bande (2) qui est transportée le long d'une direction de transport (F) ; dans lequel, à un premier endroit de l'agencement (1), est disposé un premier poste de travail destiné à l'exécution d'une première opération de travail ; et dans lequel, à un deuxième endroit de l'agencement (1), est disposé un deuxième poste de travail destiné à l'exécution d'une deuxième opération de travail ; dans lequel le deuxième poste de travail permet la sollicitation de la brame ou de la bande (2) avec un liquide ; dans lequel le premier endroit et le deuxième endroit sont décalés l'un par rapport à l'autre dans la direction de transport (F) ; et dans lequel, entre le premier endroit et le deuxième endroit de l'agencement (1), est disposé au moins un dispositif d'étanchéisation (3) destiné à retenir du liquide dans la direction de transport (F) ou dans une direction opposée à cette dernière, qui est inséré dans le deuxième poste de travail, **caractérisé en ce que** l'agencement d'étanchéisation (3) présente un certain nombre d'éléments d'étanchéisation (4) ; dans lequel au moins deux des éléments d'étanchéisation (4) sont disposés en chevauchement (x) dans une direction transversale (Q) par rapport à la direction de transport (F) ; et dans lequel les éléments d'étanchéisation (4) sont suspendus d'une manière telle qu'un tronçon d'étanchéisation (5) disposé dans une zone de l'élément d'étanchéisation (4) située en bas peut venir s'appliquer sur toute son étendue dans une direction transversale (Q) par rapport à la direction de transport (F) sur la surface (6) de la brame ou de la bande (2).

2. Agencement selon la revendication 1, **caractérisé en ce que** les éléments d'étanchéisation (4) sont réalisés sous la forme de plaques, en particulier sous la forme de plaques planes.

3. Agencement selon la revendication 1, **caractérisé en ce que** l'élément d'étanchéisation (4) comprend un rouleau (7) qui peut rouler sur la surface (6) de la brame ou de la bande (2).

4. Agencement selon l'une quelconque des revendications 1 à 3, **caractérisé en ce que** chaque élément d'étanchéisation (4) est relié, avec deux éléments de liaison (8) disposés à l'écart l'un de l'autre dans une direction transversale (Q) par rapport à la direction de transport (F), à un élément de support (9) ou à un dispositif de récupération de l'eau (10).

5. Agencement selon la revendication 4, **caractérisé en ce que** les éléments de liaison (8) sont des chaînes.

6. Agencement selon l'une quelconque des revendications 1 à 3, **caractérisé en ce que** chaque élément d'étanchéisation (4) est monté avec au moins un palier contre un élément de support (9) ou contre un dispositif de récupération de l'eau (10) ; dans lequel le palier présente un jeu de palier qui est sélectionné d'une manière telle qu'il permet, à l'endroit occupé par le palier, un mouvement de l'élément d'étanchéisation (4) en direction verticale d'au moins 5 mm, de préférence d'au moins 10 mm.

7. Agencement selon l'une quelconque des revendications 1 à 6, **caractérisé en ce que** les éléments d'étanchéisation individuels (4) sont suspendus, respectivement sont fixés, de préférence à plus d'un endroit, (par exemple 2) ou sont disposés en appui dans un palier avec du jeu à plus d'un endroit ponctuel.

8. Agencement selon l'une quelconque des revendications précédentes, **caractérisé en ce que** la valeur du chevauchement (x) de deux éléments d'étanchéisation (4) s'élève à au moins 1 mm, de préférence à au moins 1 cm.

9. Agencement selon l'une quelconque des revendications précédentes, **caractérisé en ce que**, entre 2 et 16 éléments d'étanchéisation (4) sont disposés les uns à côté des autres dans une direction transversale (Q) par rapport à la direction de transport (F).

10. Agencement selon l'une quelconque des revendications précédentes, **caractérisé en ce que** les éléments d'étanchéisation (4) sont disposés en plusieurs rangées, en particulier en deux ou trois rangées (R1, R2, R3) ; dans lequel les rangées se succèdent l'une l'autre dans la direction de transport (F) ; et dans lequel les rangées sont écartées dans la direction de transport (F) au maximum de 1 m, de préférence au maximum de 0,5 m.

11. Agencement selon l'une quelconque des revendications précédentes, **caractérisé en ce que** les éléments d'étanchéisation (4) sont disposés, lorsqu'on regarde dans une vue en plan, en étant échelonnés sous la forme d'une flèche sur la largeur du dispositif.

12. Agencement selon l'une quelconque des revendications précédentes, **caractérisé en ce que** le premier poste de travail représente un chauffage par induction, un chauffage des bords par induction, un four, en particulier un four à rouleaux ou un four chauffé au gaz, une enveloppe pour un transporteur à rouleaux, un capot d'isolation ou un appareil de mesure.

13. Agencement selon l'une quelconque des revendications 1 à 12, **caractérisé en ce que** le deuxième poste de travail représente un laveur de calamine ou un mécanisme de refroidissement d'une brame ou d'une amorce de démarrage.

14. Agencement selon l'une quelconque des revendications 1 à 13, **caractérisé en ce que** le décalage du premier et du deuxième endroit, respectivement du premier et du deuxième poste de travail dans la direction de transport (F) est inférieur à 10 m, de préférence inférieure à 5 m.

15. Agencement selon l'une quelconque des revendications 1 à 14, **caractérisé en ce que**, dans la zone de l'agencement d'étanchéisation (3), est disposé au moins un dispositif de récupération de l'eau (10).

16. Agencement selon l'une quelconque des revendications 1 à 15, **caractérisé en ce que**, dans la zone de l'agencement d'étanchéisation (3), est disposé en outre un soufflage avec de l'air ou un arrosage transversal avec de l'eau.

17. Agencement selon l'une quelconque des revendications précédentes, **caractérisé en ce que** l'agencement d'étanchéisation (3) est disposé à l'intérieur d'un logement pour le laveur de calamine et/ou avant un logement pour le laveur de calamine.

18. Agencement selon l'une quelconque des revendications précédentes, **caractérisé en ce que** l'agencement d'étanchéisation (3) fait en même temps office d'une partie d'un dispositif de récupération de l'eau.
